# EUROPEAN PATENT SPECIFICATION

(11) **EP 2 749 917 B1**
(45) Date of publication and mention of the grant of the patent: **25.01.2023**
(21) Application number: 13199669.6
(22) Date of filing: 27.12.2013
(51) Int. Cl.: G02B 6/036

(54) **Optical fiber silica glass base material**
Quarzglas Ausgangsmaterial zur Herstellung einer optischen Faser
Matériau en verre de quartz pour former un fibre optique

(30) Priority: 28.12.2012 JP 2012287315
(43) Date of publication of application: 02.07.2014
(73) Proprietor: Shin-Etsu Chemical Co., Ltd., Tokyo 100-0005 (JP)
(72) Inventor: Oyamada, Hiroshi, Gunma, 379-0127 (JP)
(74) Representative: Michalski Hüttermann & Partner Patentanwälte mbB

(56) References cited:
- EP-A1- 2 330 447
- EP-A1- 2 878 583
- US-A1- 2003 223 717
- US-A1- 2010 296 783
- US-A1- 2012 057 834
- US-A1- 2012 304 701
- US-B1- 7 676 129

## Description

### BACKGROUND

### 1. TECHNICAL FIELD

The present invention relates to a silica glass base material for an optical fiber that is used for optical communication, has a cutoff wavelength, mode field diameter, and zero-dispersion wavelength that are equivalent to those of a conventional single-mode optical fiber, and has low transmission loss for the transmitted light even when bent to a small diameter.

### 2. RELATED ART

In a conventional single mode optical fiber, signal light is propagated in the core portion of the optical fiber, and signal transmission is possible even when the optical fiber is significantly bent. Generally, with a single mode optical fiber, a smaller bending radius causes the ratio of the light leaked from the core without being transmitted to increase exponentially, which leads to an increase in transmission loss. This is referred to as bending loss. However, since this optical fiber is mostly focused on use as a main cable in a long-distance system, a bending radius of only 30 mm is generally allowed for the bending, the installation of the optical fiber is performed such that there is no excessive bending in the optical fiber. When optical fiber is used in domestic wires or access system communication, such as FTTH, that is used between a station and the homes of users, it is possible for the optical fiber to end up with a bending radius less than 30 mm, even down to a bending radius of 2.5 mm. There is a desire that the optical fiber used in this manner have low transmission loss increase with respect to bending, e.g. low bending loss.

In order to decrease the bending loss, increasing the refractive index of the core to focus light in the core is an effective method, and this can be improved by lowering the mode field diameter (MFD). Therefore, conventionally, optical fibers with an MFD of approximately 6 µm to 8 µm are often used. In this way, the bending loss when an optical fiber is wrapped around a mandrill with a diameter of 20 mm, for example, is no greater than 0.5 dB/turn at a wavelength of 1550 nm.

Since the MFD of optical fiber compliant with the ITU-T G.652 standard, which is generally used for optical communication in long-distance systems, is approximately 8 µm to 10 µm, there is a problem that the connection loss increases due to a difference in MFD when these two types of optical fibers are connected. Therefore, the MFD of optical fiber in an access system is preferably increased to be from 8 µm to 10 µm.

By using the trench-type optical fiber described in US Patent No. 4,852,968 (William A. Reed, "OPTICAL FIBER COMPRISING A REFRACTIVE INDEX TRENCH"), the MFD can be increased and the bending loss can be decreased. This has been common technical knowledge for a long time, but in recent years, the excellent bending loss characteristics have been focused on. Furthermore, there is a market demand that separate optical fibers not be required for long-distance systems and for access systems, but instead that an optical fiber used in an access system also be used as-is in a long-distance system. US 7 676 129 B1 describes an optical waveguide fiber that is bend resistant and single mode at 1260 nm and at higher wavelengths. The optical fiber includes a core with a central core region and an annular core region or, alternatively, a high index core region and a low index core region. The optical fiber also includes a cladding with an annular ring region and an annular outer region. US 2003/223717 A1 discloses an optical fiber suitable for the manufacture of optical fiber couplers and having low bend loss, low splice loss, and low attenuation. The optical fibers have bending loss of less than 0.5 dB at 1560 nm when wrapped 5 turns around a 20 mm mandrel; and an average fiber pull test loss of less than 0.1 dB in the wavelength range of 1530 nm to 1550 nm. In US 2012/304701 A1 a method is described for manufacturing an optical fiber base material, comprising manufacturing a soot deposition body having a core with a high refractive index at a center thereof, using VAD or OVD; dehydrating the soot deposition body within a heating furnace, with a temperature that does not vitrify the soot deposition body and in a helium atmosphere containing chlorine; after the dehydration, forming a core rod by vitrifying the soot deposition body at a temperature that vitrifies the soot deposition body, in a helium atmosphere; and applying cladding on the outside of the core rod. The helium atmosphere in the heating furnace when vitrifying the soot deposition body includes a gas containing a fluorine compound, and concentration of the fluorine in the atmospheric gas is in a range of 0.1 mol % to 10 mol %. In EP 2 330 447 A1 a low bend loss optical fiber is disclosed including: a core; an inner layer disposed at outside of the core, which has a refractive index lower than a refractive index of the core, the refractive index of the inner layer gradually decreasing as it becomes farther from the core; and a trench layer disposed at outside of the inner layer, which has a lowest refractive index. From US 2012/057834 A1 an optical fiber is known which is capable of suppressing an increase of a transmission loss after exposure of the optical fiber to hydrogen or deuterium is provided. The optical fiber has a core region, an inner cladding region surrounding the core region, a trench region surrounding the inner cladding region, an outer cladding region surrounding the trench region, and a refractive index varying region arranged between the inner cladding region and the trench region, the refractive index varying region having a refractive index gradually increasing from the trench region to the inner cladding region. US 2010/296783 A1 describes an optical fiber including: a first core at a center thereof; a second core adjacent to the first core to cover a circumference of the first core; a third core adjacent to the second core to cover a circumference of the second core; and a cladding adjacent to the third core to cover a circumference of the third core.

In the case of an optical fiber having a trench-type refractive index profile, the portion inside the trench easily propagates with a high-order mode of light, and the cutoff wavelength tends to increase. When the cutoff wavelength is designed such that the signal wavelength is low, there is a new problem that the zero-dispersion wavelength is shifted to a longer wavelength. The zero-dispersion wavelength is the wavelength at which the wavelength dispersion becomes zero, and when the absolute value of the wavelength dispersion is high, there is a problem that signal quality drops during long-distance transmission due to widening of the light signal pulse, for example. Furthermore, a trench-type optical fiber base material includes an interface at which the glass composition changes inside and outside of the trench layer, which tends to cause bubbles, or transmission loss increase due to imperfections in the optical fiber after the drawing.

In light of the prior art, it is an objective of the present invention to provide an optical fiber base material that has a trench-type refractive index with few bubbles and imperfections, such that the optical fiber drawn from this base material has low transmission loss, excellent bending characteristics, an MFD from approximately 8 µm to 10 µm, and a zero-dispersion wavelength that is equivalent to that of a common single mode optical fiber.

### SUMMARY

This objective is addressed by the subject matter of claim 1.

### BRIEF DESCRIPTION OF THE DRAWINGS

Fig. 1 is a schematic view of the structure of the optical fiber.
Fig. 2 shows a schematic curve representing the refractive index profile of the optical fiber of the embodiment 1-1 which does not form part of the present invention.
Fig. 3 shows a schematic curve representing the refractive index protrusion portion of the intermediate layer and the refractive index profile of the optical fiber of the embodiment 1-1.
Fig. 4 shows a schematic curve used to describe the convention flat state of the refractive index of the intermediate layer and the refractive index profile.
Fig. 5 shows the refractive index profile of the optical fiber base material according to the embodiment 2-1.
Fig. 6 shows the germanium concentration and fluorine concentration at each radial position of the optical fiber silica glass base material shown in Fig. 5.
Fig. 7 shows the OH group concentration at each radial position in the optical fiber silica glass base material shown in Fig. 5.
Fig. 8 shows the refractive index profile of the optical fiber base material according to the embodiment 2-2.
Fig. 9 shows the germanium concentration and fluorine concentration at each radial position of the optical fiber silica glass base material shown in Fig. 8.
Fig. 10 shows the first-order derivative value and second-order derivative value of the refractive index profile in the radial direction of the intermediate layer from the radial position of 2.6 mm to the radial position of 8.9 mm in the optical fiber silica glass base material shown in Fig. 8.
Fig. 11 shows the OH group concentration at each radial position in the optical fiber silica glass base material shown in Fig. 8.
Fig. 12 shows the refractive index profile of the optical fiber silica glass base material according to the comparative example 2-1 which does not form part of the present invention.
Fig. 13 shows the germanium concentration and fluorine concentration at each radial position of the optical fiber silica glass base material shown in Fig. 12.

### DESCRIPTION OF EXEMPLARY EMBODIMENTS

Hereinafter, some embodiments of the present invention will be described.

### Embodiment 1-1

First, VAD is used and a porous glass base material is synthesized as a single body from a core and an intermediate layer. The core is doped with germanium in order to increase the refractive index. The porous glass base material is heated to approximately 1200°C in a chlorine atmosphere to remove the hydroxyl groups (-OH groups) contained therein, and then heated to approximately 1400°C in a mixed gas flow atmosphere containing silane tetrafluoride gas with a flow rate of 0.5 liters per minute and helium gas with a flow rate of 4 liters per minute, and the intermediate layer is doped with fluorine to lower the refractive index, thereby forming the solid transparent glass core base material. Instead of silane tetrafluoride, methane tetrafluoride or ethane hexafluoride may be used.

A glass lathe is used to elongate the transparent glass core base material to have a prescribed outer diameter along the longitudinal direction. At this time, OH groups are captured in the surface due to the oxyhydrogen flame of the glass lathe, but are removed by submerging the transparent glass core base material in a hydrofluoric acid solution to dissolve the surface. When performing the elongation with the glass lathe, an argon plasma flame may be used as the heating source. In this case, the OH groups do not penetrate into the surface of the core base material, and therefore the processing with hydrofluoric acid can be omitted.

Next, silica glass fine particles are deposited on the transparent glass core base material using VAD, thereby forming a porous layer that corresponds to a third core. This structure is heated to approximately 1200°C in a chlorine gas atmosphere, the OH groups included in the porous glass base material layer are removed, the structure is heated to approximately 1400°C in a mixed gas flow atmosphere containing silane tetrafluoride gas with a flow rate of 1 liter per minute and helium gas with a flow rate of 2 liters per minute, and the porous glass layer is doped with fluorine, thereby solidifying the porous glass layer to form a transparent glass layer with a low refractive index and forming the low refractive index trench. Instead of silane tetrafluoride, methane tetrafluoride or ethane hexafluoride may be used.

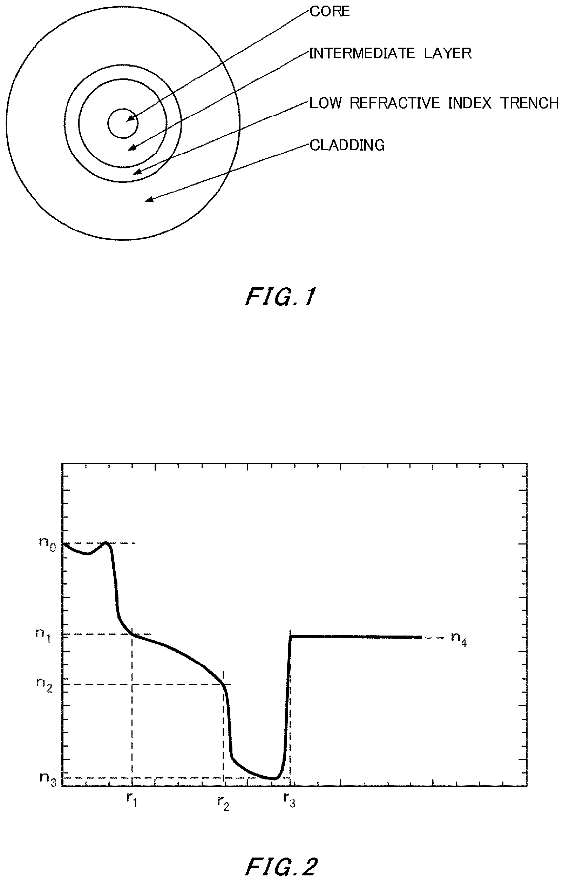

The transparent core base material including the core, intermediate layer, and low refractive index trench manufactured in this manner is inserted into a silica glass tube to serve as an intermediate cladding and heated to approximately 2000°C while the inside of the tube is depressurized by a vacuum pump, thereby forming the core portion integrally with the intermediate cladding and manufacturing the optical fiber transparent glass base material. Furthermore, VAD is used to deposit a porous silica glass layer on the outside of the transparent glass base material, and this structure is heated to approximately 1600°C in a helium gas atmosphere to realize transparent vitrification and manufacture the optical fiber base material. By heating this base material to 2100°C and drawing the heated base material, an optical fiber with a diameter of 125 µm was formed. The refractive index profile of this optical fiber is shown in Fig. 2. Fig. 1 is a schematic view of the structure of the optical fiber.

The refractive index profile of the manufactured optical fiber is shown in Fig. 2. The optical fiber includes a core with a radius to r₁ at the center thereof, an intermediate layer with a radius to r₂ covering the periphery of the core and located adjacent thereto, a low refractive index trench with an outermost radius to r₃ covering the periphery of the intermediate layer and located adjacent thereto, and a cladding covering the periphery of the low refractive index trench and located adjacent thereto. The refractive index of the intermediate layer decreases continuously and slowly from the core side to the cladding side, exhibits a maximum value at the radial position r₁, and exhibits a minimum value at the radial position r₂. Furthermore, it was confirmed that the core has a maximum refractive index n₀, the intermediate layer has a refractive index n₁ at the radial position r₁ and a refractive index n₂ at the radial position r₂, the low refractive index trench has a minimum refractive index n₃, and the outermost cladding has a minimum refractive index n₄, such that n₀ > n₁ > n₂ > n₃ and n₃ < n₄.

### Embodiment 1-2

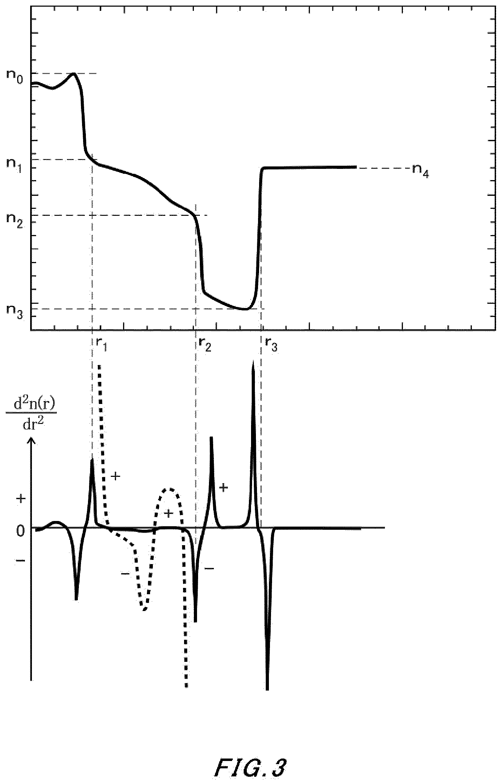

A porous glass base material was manufactured using VAD and the OH groups were removed through processing in a chlorine atmosphere, in the same manner as in Embodiment 1-1. After this, the structure was heated to approximately 1400°C in an atmosphere formed by methane tetrafluoride with a flow rate of 0.3 liters per minute and helium gas with a flow rate of 4 liters per minute. Next, the same process as used in Embodiment 1-1 was applied to this transparent glass base material, thereby manufacturing the optical fiber. The refractive index profile of the optical fiber and the profile of the second-order derivative for the radial position of the refractive index are shown in Fig. 3. In the bottom portion of Fig. 3, the dotted line shows the second derivative value near the intermediate layer, enlarged to 40 times the size. This second derivative value changes from positive, to negative, to positive, and therefore the refractive index of the intermediate layer changes from protruding downward, to protruding upward, to protruding downward, thereby confirming that the intermediate layer includes a protruding portion. Furthermore, slightly outward from the region near r = r₂, the second derivative value changes from negative to positive, and therefore it is understood that there is an inflection point in the refractive index in this region.

### Comparative Examples 1-1 and 1-2

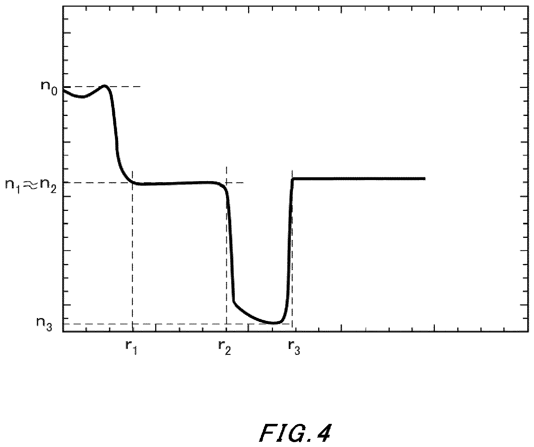

A porous glass base material was manufactured using VAD and the OH groups were removed through processing in a chlorine atmosphere, in the same manner as in Embodiment 1-1. After this, the structure was heated to approximately 1500°C in an atmosphere formed by helium gas with a flow rate of 4.5 liters per minute and containing no fluorine-type gas. Next, the same process as used in Embodiment 1-1 was applied to this transparent glass base material, thereby manufacturing the optical fiber. The refractive index profile of this optical fiber is shown in Fig. 4, and it can be seen that the refractive index of the intermediate layer is approximately flat. The optical characteristics of the optical fibers manufactured according to the embodiments 1-1 and 1-2 and the comparative examples 1-1 and 1-2 are shown together in Table 1.

**Table 1**

| | EMBODIMENT 1-1 | EMBODIMENT 1-2 | COMPARATIVE EXAMPLE 1-1 | COMPARATIVE EXAMPLE 1-2 |
|---|---|---|---|---|
| CUTOFF WAVELENGTH (22M) | 1238 nm | 1241 nm | 1244 nm | 1244 nm |
| MODE FIELD DIAMETER (1310 nm) | 8.36 µm | 8.60 µm | 9.00 µm | 8.67µm |
| ZERO-DISPERSION WAVELENGTH | 1320 nm | 1319 nm | 1320 nm | 1332 nm |
| BENDING LOSS (r=5 mm, 1550 nm) | 0.051 dB/turn | 0.054 dB/turn | 0.180 dB/turn | 0.054 dB/turn |

### Embodiment 2-1

A trench-type single mode optical fiber has a core that is formed with a refractive index that is increased by doping with a positive dopant from a center radial position. An intermediate layer (inner cladding layer) is formed to be adjacent to the core and surround the core on the radial outside thereof. A trench layer is provided to be adjacent to the inner cladding layer and surround the intermediate layer on the radial outside thereof, and is doped with a negative dopant to have a reduced refractive index. Furthermore, a cladding layer (outer cladding layer) is formed adjacent to the trench layer and surrounding the trench layer on the radial outside thereof. An optical fiber for communication is formed of silica glass, and has a diameter of 125 µm according to the ITU-TG.652 standard, for example. The manufacture of such an optical fiber includes preparing an optical fiber base material that has a refractive index profile similar to that of a target optical fiber with a diameter of tens of millimeters, and then heating, softening, and drawing this optical fiber base material. The resulting optical fiber has an absolute value for the refractive index that differs according to residual stress caused by the heating/cooling rate and tensile force during the drawing, but the positional relationship of the core, cladding, and the like in the radial direction of the base material is preserved.

With this optical fiber base material, the core is doped with a positive dopant for increasing the refractive index, such as germanium, and the trench portion is doped with a negative dopant for decreasing the refractive index, such as fluorine. The refractive index of the cladding layer is set to the refractive index level of pure silica glass.

Using VAD, oxygen and hydrogen are introduced to a central burner to generate an oxyhydrogen flame and silicon tetrachloride (SiCl₄) and germanium tetrachloride (GeCl₄) are introduced to cause a hydrolytic reaction, which generates silica (SiO₂) glass fine particles doped with germanium (Ge). These glass fine particles are deposited on a target to form a central portion of a porous glass base material. At the same time, in the same manner, peripheral burners are supplied with oxygen and hydrogen to generate an oxyhydrogen flame, and silicon tetrachloride is introduced to cause a hydrolytic reaction, which generates pure silica glass fine particles that do not include germanium, and these glass fine particles form the periphery of the porous glass base material. The germanium is one example of a positive dopant for increasing the refractive index of the silica glass. Here, the central portion is a region that will become the core of the optical fiber base material, and the periphery is a portion that will become the intermediate layer of the optical fiber base material.

This porous glass base material is heated to approximately 1200°C in a chlorine gas (Ch) atmosphere, "dehydration" is performed to remove the OH groups from the porous silica glass, and transparent vitrification is performed by heating this structure to approximately 1400°C in a helium (He) gas atmosphere that also includes fluorine gas, such as methane tetrafluoride (CF₄). In this way, a first intermediate base material is obtained that includes a core at the center thereof with a higher refractive index than pure silica glass and an intermediate layer surrounding the core that is made of silica glass doped with fluorine. The fluorine is an example of the negative dopant for lowering the refractive index of the silica glass.

During the dehydration, the germanium chloride (GeClx) is generated as a result of the chlorine gas acting on the germanium included in the porous glass at the center, and a small amount of this germanium chloride spreads toward the periphery of the porous glass base material. As a result, the germanium concentration in the core drops a small amount, and the intermediate layer becomes unevenly doped with germanium in the radial direction.

By adjusting the amount of germanium tetrachloride introduced to the central burner, the bulk density of the porous glass base material, and the processing time, heating temperature, and chlorine gas pressure during the dehydration, the concentration of the germanium in the core and the germanium concentration profile in the intermediate layer can be adjusted. By adjusting the germanium concentration in the core to realize a relative refractive index difference of 0.3% to 0.45% with respect to pure silica glass, an intermediate base material is obtained that can fulfill the desired optical characteristics for the optical fiber. When the germanium concentration is low, the refractive index of the core is reduced, and therefore the light confinement effect of the resulting optical fiber is weakened, thereby increasing the bending loss. Furthermore, when the germanium concentration is high, the Rayleigh scattering loss of the resulting optical fiber tends to increase. Therefore, it is preferable that the core be doped with only the necessary amount of germanium, and in order to prevent any unnecessary germanium doping beyond what is needed to achieve the refractive index, it is preferable that the core not be doped with the negative dopant that lowers the refractive index, such as fluorine. By adjusting the concentration of germanium added in the core such that the relative refractive index difference with respect to pure silica glass is preferably from 0.33% to 0.40%, more preferably from 0.34% to 0.39%, the characteristics including MFD, cutoff wavelength, and bending loss of the optical fiber manufactured from this base material can be matched to the target values, and low loss can be realized.

Due to the scattering phenomenon occurring during dehydration, the doping of germanium in the intermediate layer is such that a change in germanium concentration across the interface between the core and the intermediate layer is easily made continuous. In this way, when the change in germanium concentration across the interface between the core and the intermediate layer is made continuous, the viscosity change across the interface between the core and the intermediate layer during drawing becomes gradual, which makes structural defects less likely to occur, and therefore this continuous change is preferable. It is preferable that the germanium concentration in the intermediate layer is higher farther inward and lower farther outward, and that the germanium concentration is substantially zero at the outermost layer of the intermediate layer. The germanium concentration is preferably zero at all radial positions at distances greater than or equal to double the radius of the core.

By suitably adjusting the processing time, heating temperature, and pressure of the gas containing fluorine during the transparent vitrification, the fluorine (F) doping in the intermediate layer can be made non-uniform in the radial direction. In the resulting optical fiber, the signal light is transmitted while leaking into the intermediate layer, but it is preferable that the amount of dopant added to the intermediate layer be as low as possible in order to decrease the Rayleigh scattering acting on this leaked light. On the other hand, when the fluorine concentration is high at the interface between the intermediate layer and the trench layer formed on the outside thereof, the change in fluorine concentration across the interface between the intermediate layer and the trench becomes gradual, thereby causing the viscosity change in this portion during drawing to become gradual and reducing the occurrence of structural defects. Accordingly, it is preferable that the fluorine concentration profile in the intermediate layer is higher farther inward, lower farther outward, and substantially zero near the interface between the intermediate layer and adjacent core. The fluorine concentration preferably has a maximum value at an outermost portion of the intermediate layer, and is preferably such that the relative refractive index difference of the intermediate layer with respect to pure silica glass at this portion is between -0.25% and -0.10%, more preferably between -0.20% and -0.15%.

Next, processing is performed such that the outer diameter of the first intermediate base material and the thickness of the intermediate layer become prescribed values, and a trench layer is formed outside this structure to manufacture the second intermediate base material. Specifically, the entire rod is elongated such that the core diameter of the first intermediate base material becomes longitudinally uniform. The surface of the intermediate layer is removed, through machine grinding or chemical dissolving, such that the thickness of the intermediate layer becomes a predetermined value, and then the trench layer formed of porous silica glass is deposited on the surface of the intermediate layer. Specifically, silica glass fine particles may be generated by introducing silicon tetrachloride into the oxyhydrogen flame burner, and these glass silica particles are deposited in a back and forth manner on the rod being rotated. Next, the porous silica glass trench layer deposited on the rod is heated to approximately 1200°C in an atmosphere containing chlorine gas to remove the OH groups from the porous silica glass through dehydration, and then transparent vitrification is performed by heating the resulting structure to approximately 1400°C in an atmosphere of helium (He) gas that also includes a gas containing fluorine, such as silane tetrafluoride (SiF₄). In this way, the second intermediate base material is formed including the trench layer that has been doped with fluorine and surrounds the intermediate layer, which in turn surrounds the core at the center. In order to prevent the trench layer from being doped with as little fluorine as is needed to realize the desired refractive index, it is preferable that the trench layer is not doped with the positive dopant that increases the refractive index, such as germanium.

Here, prior to depositing the porous silica glass layer of the trench layer, a glass structure relaxation dopant is preferably introduced in the rod surface. The glass structure relaxation dopant may be an OH group, for example, and can be easily introduced by exposing the rod surface to an oxyhydrogen flame that does not include glass raw material. As a result, glass structure relaxation is encouraged near the interface between the intermediate layer and the trench layer, and therefore the occurrence of bubbles at the interface is restricted and the imperfection loss of the optical fiber is reduced. When OH groups are used, the OH groups may be introduced in the region near the rod surface with a concentration of 0.5 to 5 ppm by weight. If this concentration is too high, the transmission loss of the optical fiber after drawing becomes worse.

Furthermore, the refractive index profile of the first intermediate base material is measured prior to processing the first intermediate base material, and based on this refractive index profile, the mode field diameter estimated for the radial size of the optical fiber after drawing may be calculated. The estimated mode field diameter may be calculated as an analytic approximation according to the wave theory of light based on the core diameter and the relative refractive index of the core, but accuracy can be improved by calculating the electric field profile by solving for a characteristic matrix equation from the refractive index profile using a numerical calculation such as the finite element method. Furthermore, by comparing the estimated value to a measured value of the mode field diameter of an optical fiber that has been actually drawn from a similar optical fiber base material and adding a suitable correction based on the proportional coefficient of this comparison in order to reduce the effect of the residual stress in the optical fiber, which differs according to the drawing conditions, the accuracy of the estimated value can be improved. The value M_{P} (mm) is calculated by converting the estimated mode field diameter calculated in the above manner into the size of the optical fiber base material, and the outer radius of the intermediate layer after processing, which reaches to r₂ (mm), is preferably set such that 2r₂/M_{P} ≥ 2.6, more preferably such that 2r₂/M_{P} ≥ 2.7, and most preferably such that 2r₂/M_{P} ≥ 2.75. As a result, the increase in the transmission loss caused by the glass structure relaxation dopant can be restricted.

Next, processing is performed such that the thickness of the trench layer of the second intermediate base material becomes a prescribed amount and a cladding layer is formed on the outside of this structure, thereby manufacturing the final base material. In other words, the surface of the trench layer is removed, through machine grinding or chemical dissolving, such that the thickness of the trench layer of the second intermediate base material becomes a predetermined value, and then the cladding layer formed of porous silica glass is deposited on the surface of the trench layer. Specifically, silica glass fine particles may be generated by introducing silicon tetrachloride into the oxyhydrogen flame burner, and these glass silica particles are deposited in a back and forth manner on the rod being rotated. Next, the porous silica glass cladding layer deposited on the rod is heated to approximately 1200°C in an atmosphere containing chlorine gas to remove the OH groups from the porous silica glass through dehydration, and then transparent vitrification is performed by heating the resulting structure to approximately 1500°C in an atmosphere of helium (He) gas. In this way, the final intermediate base material is formed including the core at the center, which is surrounded by the intermediate layer, which is surrounded by the trench layer doped with fluorine, which is surrounded by the cladding layer formed of pure silica glass.

Prior to depositing the porous silica glass layer of the cladding layer, a glass structure relaxation dopant is preferably introduced in the rod surface. As a result, glass structure relaxation is encouraged near the interface between the trench layer and the cladding layer, and therefore the occurrence of bubbles at the interface is restricted. When OH groups are used, the OH groups may be introduced in the region near the rod surface with a concentration of 0.5 to 50 ppm by weight. If this concentration is too high, the transmission loss of the optical fiber after drawing becomes worse. The optical fiber silica glass base material manufactured as described above includes 0.1% to 0.3% weight of the chlorine present during dehydration, but the effect of this chlorine on the refractive index profile and the optical characteristics of the optical fiber is small enough to be ignored.

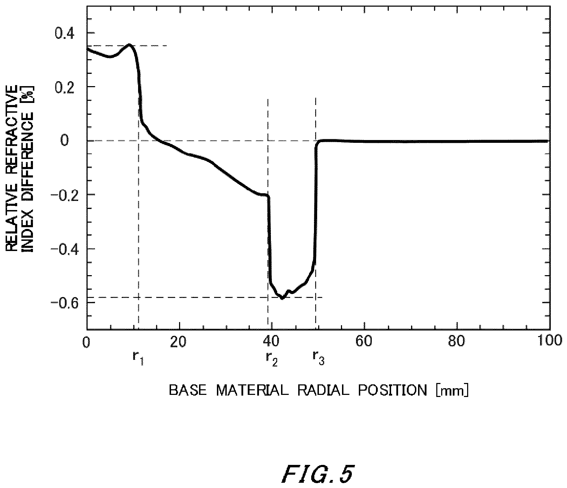

Fig. 5 shows the refractive index profile of the optical fiber base material according to the embodiment 2-1. Here, the radial position r₁ of the interface between the core and the intermediate layer is 11 mm, the radial position rz of the interface between the intermediate layer and the trench layer is 38 mm, and the interface position r₃ of the interface between the trench layer and the cladding layer is 49 mm. In this way, the thickness of the intermediate layer in the radial direction is greater than the thickness of the trench layer. The core has a refractive index profile with an approximately stepped shape, and a relative refractive index difference, with the pure silica glass of the cladding as a reference, that is 0.34% in the center portion and has a maximum of 0.38%. The relative refractive index difference of the intermediate layer has a maximum value of 0.19% at the radial position r₁, decreases slowly in an outward direction, and has a minimum value of -0.20% at the radial position r₂. The trench layer has a refractive index profile with an approximately stepped shape and a minimum value of -0.585%.

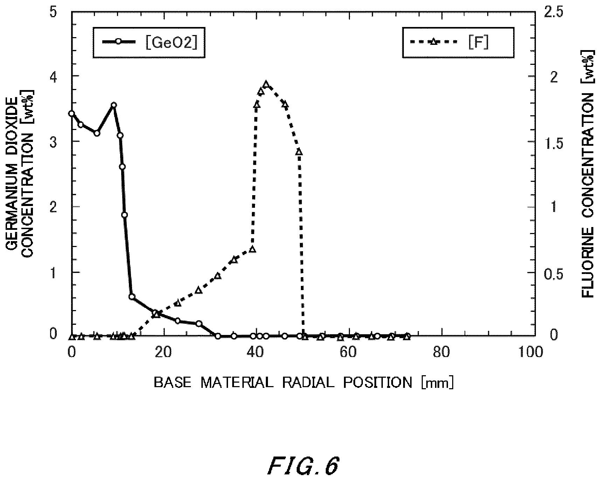

Fig. 6 shows the germanium concentration and fluorine concentration at each radial position of the optical fiber silica glass base material shown in Fig. 5. The germanium concentration and fluorine concentration were measured by cleaving the optical fiber silica glass base material, mirror-polishing the cleaved surface, and using an EPMA (electro probe micro-analyzer) to perform the measurement. The germanium concentration and fluorine concentration in Fig. 6 are shown as percentages by weight, and the germanium concentration is a value obtained by converting the percent by weight of germanium dioxide (GeO₂).

The intermediate layer is doped with germanium and fluorine unevenly in the radial direction, from a radial position of 11 mm to a radial position of 38 mm. The germanium concentration of the intermediate layer is at a maximum at the radial position r₁, which is 11 mm, decreases continuously and gradually toward the radial outside, is zero at the radial position of 31 mm, and remains at zero from this position and outward to the cladding layer. In other words, the region of the intermediate layer near the core is doped heavily with the germanium, which is the positive dopant, and the germanium concentration is zero at the radial position r₂. Furthermore, the fluorine concentration is at a maximum value at the radial position r₂, which is 38 mm, decreases gradually toward the radial inside, is zero at the radial position of 13 mm, and remains at zero from this position and inward to the core. In other words, the region of the intermediate layer near the trench layer is heavily doped with the negative dopant, and the fluorine concentration is zero at the radial position r₁. Accordingly, the intermediate layer is formed from three layers in the radial direction and includes, in order from the most radially inward layer, a region that includes germanium and does not include fluorine, a region that includes both germanium and fluorine, and a region that includes fluorine and does not include germanium. Furthermore, the germanium concentration changes continuously from the core toward the intermediate layer, across the interface between the core and the intermediate layer at r₁ = 11 mm. On the other hand, the fluorine concentration changes non-continuously across the interface between the intermediate layer and the cladding layer at r₂ = 38 mm.

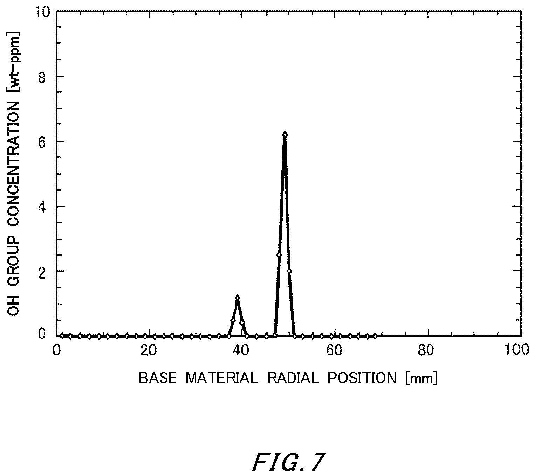

Fig. 7 shows the OH group concentration at each radial position in the optical fiber silica glass base material shown in Fig. 5. The OH group concentration was measured by cutting the optical fiber silica glass base material to a length of 100 mm, mirror-polishing both end surfaces, and using an FTIR (Fourier Transform Infrared) spectrometer to perform the measurement. The measurement included providing a square aperture with 1.5 mm sides on the infrared light input side and emission side, and 60,000 measurements were performed at each measurement point. As shown in Fig. 7, the OH group concentration is 1.2 ppm by weight locally at the interface between the intermediate layer and the trench layer, and is 6.2 ppm by weight locally at the interface between the trench layer and the cladding layer.

It was assumed that this base material is drawn to manufacture an optical fiber with a core radius of 3.42 µm, and the mode field diameter of this assumed optical fiber at a wavelength of 1310 nm was calculated based on the refractive index profile shown in Fig. 5, and was found to be 8.73 µm. Converting this estimated mode field diameter to a size of the base material before drawing results in a value of M_{P} = 28.1 mm, and so the ratio 2r₂/M_{P} with respect the diameter at the interface position between the trench layer and the intermediate layer is 2.70. In this way, by setting 2r₂/M_{P} to be no less than 2.6, preferably no less than 2.7, even when OH groups are present at the interface between the intermediate layer and the trench layer at 0.5 to 5 ppm by weight, the effect of transmission loss of the optical fiber can be restricted and the base material can be drawn to form an optical fiber with favorable transmission loss.

The following describes the method for calculating the base material size conversion value M_{P} of the mode field diameter. When manufacturing an optical fiber from a base material, one end of the base material is usually heated and softened, and the base material is elongated to obtain the desired optical fiber diameter. For example, in the case of a class B single mode fiber described in IEC 60793-2-50 International Standard (Subtitle: Optical Fibres- Part 2-50: Product specification - Sectional specification for class B singlemode fibres), this diameter is 125 µm. At this time, it is vital that the elongating be performed such that the positional relationship in the radial direction of the refractive index profile structure including the core, cladding, and the like of the base material be preserved in the optical fiber after the elongating, and so the refractive index profile of the base material in the radial direction resembles that of the optical fiber.

On the other hand, the electrical field profile pattern occurring when light with a prescribed wavelength is incident to the optical fiber is theoretically determined according to the refractive index profile of the optical fiber. The mode field diameter measured from this electrical field pattern also reflects the refractive index profile of the optical fiber. Accordingly, based on the refractive index profile of the base material, it is possible to estimate the mode field diameter of the optical fiber when the base material is drawn to be an optical fiber with a prescribed outer diameter (i.e. a prescribed core radius). The following technique is used to calculate the mode field diameter of the optical fiber, from the refractive index profile of the base material. First, the target outer diameter of the optical fiber and the core radius corresponding thereto are set. For example, if the relative refractive index difference of the core is 0.3% to 0.45%, the optical characteristics of the optical fiber defined by IEC class B described above are matched when the core radius is set to a range from 3 µm to 4.5µm.

Next, the core radius set in the refractive index profile in the radial direction of the base material is applied, and the electrical field profile is calculated by plugging this core radius into Maxwell's equation for propagated light waves. The accuracy of the calculation can be improved by performing a numerical calculation according to the finite element method or the like. For example, the calculation technique described in Katsunari Okamoto, "Comparisons of calculated and measured impulse responses of optical fibers," Applied Optics, vol. 18, No. 13 (1979) pp. 2199-2206 can be used.

The mode field diameter is calculated from the electrical field profile calculation value obtained in the manner described above. This calculation may be performed according to spot size (equivalent to the mode field radius) definition technique described in K. Petermann, "CONSTRAINTS FOR FUNDAMENTAL-MODE SPOT SIZE FOR BROADBAND DISPERSION-COMPENSATED SINGLEMODE FIBERS," Electronics Letters, vol. 19, No. 18 (1983), pp. 712-714. In this way, the estimated value of the mode field diameter of the optical fiber can be uniquely determined from a prescribed light wavelength, a prescribed core radius, and a refractive index profile of the base material. In this way, the obtained mode field diameter can be converted into the base material size. In other words, the calculation can be made using the actual measured value for the core radius of the base material and the core radius of the optical fiber set in the above calculation. For example, in the case of the embodiment 2-1, the estimated value of the mode field diameter is calculated to be 8.73 µm when the base material core radius of r₁ = 11 mm results in an optical fiber core radius of 3.42 µm. Then, Mp can be calculated to be 28.1 mm by using this estimated value for the base material size conversion in the equation 8.73 µm×(11 mm/3.42 µm) = 28.1 mm.

A base material was actually heated to 2100°C, softened, and drawn to form an optical fiber with a core radius of 3.42 µm. The softened base material deforms while maintaining the positional relationship of the refractive index profile when elongating the optical fiber, and therefore the refractive index profile of the resulting optical fiber is approximately the same as the refractive index profile of the base material. The measured value for the mode field diameter of this optical fiber at a wavelength of 1310 nm was 8.71 µm, which is approximately the same as the estimated value. The transmission loss of this fiber showed favorable values of 0.324 dB/km at a wavelength of 1310 nm, 0.302 dB/km at a wavelength of 1383 nm, and 0.182 at a wavelength of 1550 nm.

It is known that the transmission loss is affected when OH groups are present in the optical fiber, due to the occurrence of an absorption peak at a wavelength of 1383 nm, but the effect of the OH groups is reduced as a result of 2r₂/M_{P} being 2.70. Furthermore, the cutoff wavelength for 22 m of the fiber was 1208 nm and the bending loss for a radius of 5 mm at a wavelength of 1550 nm was 0.126 dB/turn. The zero-dispersion wavelength was 1322 nm.

In this way, the zero-dispersion wavelength is preferably in the range of 1300 nm to 1324 nm, which is equivalent to that of a single mode optical fiber commonly used for long-distance communication. This is because there is a market demand that separate optical fibers not be required for long-distance systems and for access systems, but instead that an optical fiber used in an access system also be used as-is in a long-distance system.

This optical fiber was subjected to a hydrogen aging test, which includes spending 40 hours in a hydrogen (H₂) atmosphere at 1 atmosphere at room temperature (approximately 25°C). The transmission loss spectrum of the optical fiber was measured before and after the aging, but no anomalies were found. Based on this, it is clear that this optical fiber does not contain structural defects such as peroxy radicals.

Using the same base material as in the embodiment 2-1, an optical fiber with a core radius of 3.53 µm was assumed, and the estimated mode field diameter at a wavelength of 1310 nm was calculated to be 8.85 µm. Converting this estimated mode field diameter to a size of the base material before drawing results in a value of M_{P} = 27.5 mm, and so the ratio 2r₂/M_{P} with respect the diameter at the interface position between the trench layer and the intermediate layer is 2.76. In this way, by setting 2r₂/M_{P} to be no less than 2.75, the effect of transmission loss of the optical fiber due to the OH groups at the interface between the intermediate layer and the trench layer can be further restricted and the base material can be drawn to form an optical fiber with more favorable transmission loss.

A base material was actually drawn to form an optical fiber with a core radius of 3.53 µm. The measured value for the mode field diameter of this optical fiber at a wavelength of 1310 nm was 8.85 µm, which is the same as the estimated value. The transmission loss of this fiber showed favorable values of 0.321 dB/km at a wavelength of 1310 nm, 0.295 dB/km at a wavelength of 1383 nm, and 0.180 at a wavelength of 1550 nm, and the effect of the OH groups was barely seen as a result of 2r₂/M_{P} being 2.76. Furthermore, the cutoff wavelength for 22 m of the fiber was 1231 nm, the zero-dispersion wavelength was 1319 nm, and the bending loss for a radius of 5 mm at a wavelength of 1550 nm was 0.086 dB/turn.

### Embodiment 2-2

Using VAD, in the same manner as the embodiment 2-1, a porous glass base material was formed having a central portion and an outer portion, in which the central portion is doped with germanium as the positive dopant and the outer portion is formed of pure silica glass that does not include the positive dopant. Here, the central portion is the region that will serve as the core of the optical fiber base material and the outer portion is the portion that will serve as the intermediate layer of the optical fiber base material.

This porous glass base material is heated to approximately 1150°C in a chlorine gas (Ch) atmosphere, "dehydration" is performed to remove the OH groups from the porous silica glass, and transparent vitrification is performed by heating this structure to approximately 1420°C in a helium (He) gas atmosphere that also includes silane tetrafluoride (SiF₄). In this way, a first intermediate base material is obtained that includes a core at the center thereof with a higher refractive index than pure silica glass and an intermediate layer surrounding the core that is made of silica glass doped with fluorine.

During the dehydration, the germanium chloride (GeClx) is generated as a result of the chlorine gas acting on the germanium included in the porous glass at the center, and a small amount of this germanium chloride spreads toward the periphery of the porous glass base material. As a result, the germanium concentration in the core drops a small amount, and the intermediate layer becomes unevenly doped with germanium in the radial direction. Furthermore, the intermediate layer is unevenly doped with fluorine (F) in the radial direction due to the silane tetrafluoride introduced during the transparent vitrification.

Next, in the same manner as the embodiment 2-1, processing is performed such that the outer diameter of the first intermediate base material and the thickness of the intermediate layer become prescribed values, and a trench layer is formed outside this structure to manufacture the second intermediate base material. Specifically, the entire rod is elongated such that the core diameter of the first intermediate base material becomes longitudinally uniform. The surface of the intermediate layer is removed using a hydrofluoric (HF) solution, such that the thickness of the intermediate layer becomes a predetermined value, and then the trench layer formed of porous silica glass is deposited on the surface of the intermediate layer. Prior to depositing the porous silica glass layer of the trench layer, OH groups are introduced to the rod surface by exposing the rod surface to an oxyhydrogen flame that does not include glass raw material. Next, the porous silica glass trench layer deposited on the rod is heated to approximately 1200°C in an atmosphere containing chlorine gas to remove the OH groups from the porous silica glass through dehydration, and then transparent vitrification is performed by heating the resulting structure to approximately 1400°C in an atmosphere of helium (He) gas that also includes a gas containing fluorine, such as silane tetrafluoride (SiF₄). In this way, the second intermediate base material is formed including the trench layer that has been doped with fluorine and surrounds the intermediate layer, which in turn surrounds the core at the center. Due to the effect of a glass structure relaxation dopant in the interface between the intermediate layer and the trench layer, glass structure relaxation is encouraged near this interface and the occurrence of bubbles at the interface is restricted.

Next, processing is performed to remove the surface of the trench layer using hydrofluoric acid, such that the thickness of the trench layer of the second intermediate base material becomes a prescribed amount, and a cladding layer is formed on the outside of this structure. The second intermediate base material is inserted into a silica glass tube to serve as a cladding and heated to approximately 2000°C while the inside of the tube is depressurized by a vacuum pump, thereby forming the core portion integrally with the intermediate cladding and manufacturing the optical fiber transparent glass base material. As a result, there are barely any OH groups present at the interface between the trench layer and the cladding layer. In this way, the final base material is formed including the core at the center, which is surrounded by the intermediate layer, which is surrounded by the trench layer doped with fluorine, which is surrounded by the cladding layer formed of pure silica glass. Bubbles with a size from 0.5 mm to 1 mm were seen intermittently in portions near the interface between the trench layer and the cladding layer of the base material.

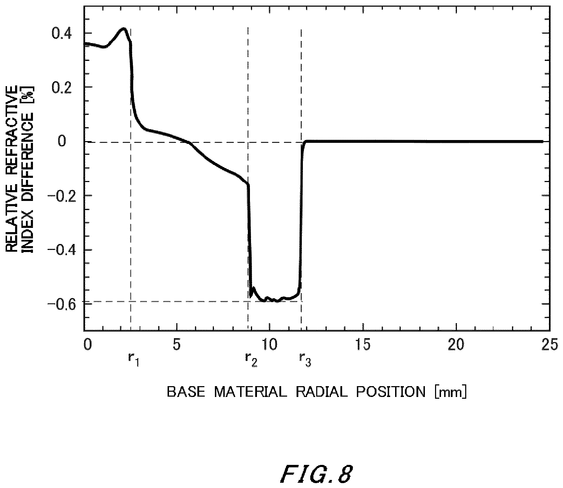

Fig. 8 shows the refractive index profile of the optical fiber base material according to the embodiment 2-2. Here, the radial position r₁ of the interface between the core and the intermediate layer is 2.6 mm, the radial position r₂ of the interface between the intermediate layer and the trench layer is 8.9 mm, and the interface position r₃ of the interface between the trench layer and the cladding layer is 11.8 mm. The core has a refractive index profile with an approximately stepped shape, and a relative refractive index difference, with the pure silica glass of the cladding as a reference, that is 0.36% in the center portion and has a maximum of 0.42%. The relative refractive index difference of the intermediate layer has a maximum value of 0.16% at the radial position r₁, decreases slowly in an outward direction, and has a minimum value of -0.16% at the radial position r₂. The trench layer has a refractive index profile with an approximately stepped shape and a minimum value of -0.595%.

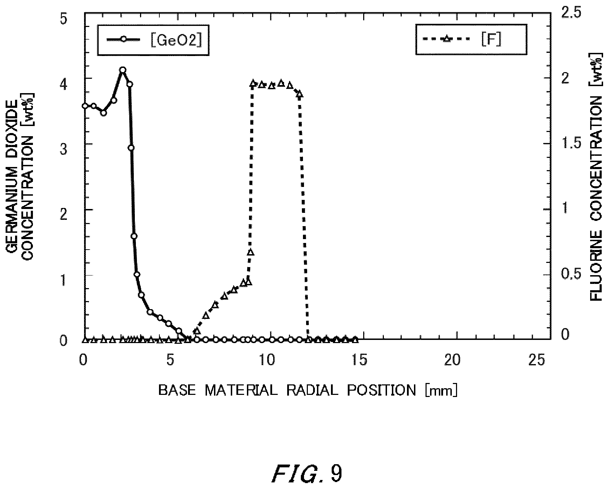

Fig. 9 shows the germanium concentration and fluorine concentration at each radial position of the optical fiber silica glass base material shown in Fig. 8. The germanium concentration and fluorine concentration were measured by cleaving the optical fiber silica glass base material, mirror-polishing the cleaved surface, and using an EPMA to perform the measurement. The germanium concentration and fluorine concentration in Fig. 9 are shown as percentages by weight, and the germanium concentration is a value obtained by converting the percent by weight of germanium dioxide (GeO₂).

The intermediate layer is doped with germanium and fluorine unevenly in the radial direction, from a radial position of 2.6 mm to a radial position of 8.9 mm. The germanium concentration of the intermediate layer is at a maximum at the radial position r₁, which is 2.6 mm, decreases continuously and gradually toward the radial outside, is zero at the radial position of 5.5 mm, and remains at zero from this position and outward to the cladding layer. Furthermore, the fluorine concentration is at a maximum value at the radial position r₂, which is 8.9 mm, decreases gradually toward the radial inside, is zero at the radial position of 5.5 mm, and remains at zero from this position and inward to the core. Accordingly, the intermediate layer is formed from three layers in the radial direction and includes, in order from the most radially inward layer, a region that includes germanium and does not include fluorine, a region that includes neither germanium nor fluorine, and a region that includes fluorine and does not include germanium. Furthermore, the germanium concentration changes continuously from the core toward the intermediate layer, across the interface between the core and the intermediate layer at r₁ = 2.6 mm. On the other hand, the fluorine concentration changes non-continuously across the interface between the intermediate layer and the cladding layer at r₂ = 8.9 mm.

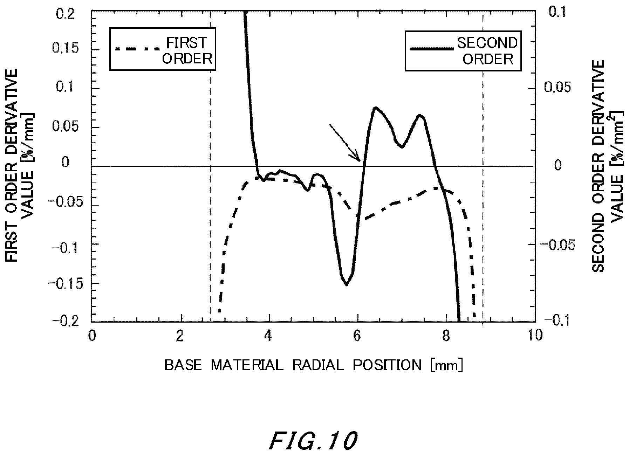

Fig. 10 shows the first-order derivative value and second-order derivative value of the refractive index profile in the radial direction of the intermediate layer from the radial position of 2.6 mm to the radial position of 8.9 mm in the optical fiber silica glass base material shown in Fig. 8. The first-order derivative value is a negative value in the intermediate layer, which indicates that the refractive index is continuously decreasing in the radial direction. On the other hand, the second-order derivative value has an inflection point at which the sign switches from positive to negative, near the radial position of 3.7 mm and near the radial position of 7.8 mm. These two points are caused respectively by the refractive index transitions from the core to the intermediate layer and from the intermediate layer to the trench layer. On the other hand, there is a border at which the sign changes from negative to positive near the radial position of 6 mm, and this is also an inflection point of the refractive index. The portion of the intermediate layer that is farther inward than the inflection point at the radial position of 6 mm corresponds to the concentration of germanium, which is the positive dopant, gradually decreasing and becoming zero from the outside of this inflection point. At the same time, the portion that is farther outside than this inflection point corresponds to the concentration of the fluorine, which is the negative dopant, gradually decreasing from the outside inward and becoming zero inside of the inflection point.

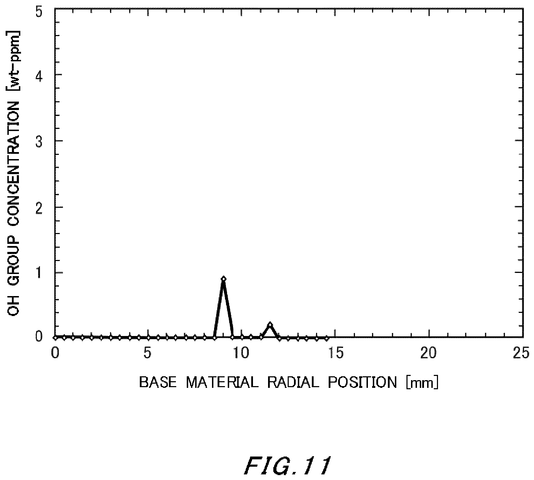

Fig. 11 shows the OH group concentration at each radial position in the optical fiber silica glass base material shown in Fig. 8. The OH group concentration was measured by cutting the optical fiber silica glass base material to a length of 100 mm, mirror-polishing both end surfaces, and using an FTIR spectrometer to perform the measurement. The measurement included providing a square aperture with 1.5 mm sides on the infrared light input side and emission side, and an average value based on 60,000 spectrum scans was acquired at each measurement point. As shown in Fig. 11, the OH group concentration is 0.9 ppm by weight locally at the interface between the intermediate layer and the trench layer, and is 0.2 ppm by weight locally at the interface between the trench layer and the cladding layer.

It was assumed that this base material is drawn to manufacture an optical fiber with a core radius of 3.58 µm, and the mode field diameter of this assumed optical fiber at a wavelength of 1310 nm was calculated based on the refractive index profile shown in Fig. 8, and was found to be 8.38 µm. Converting this estimated mode field diameter to a size of the base material before drawing results in a value of M_{P} = 6.1 mm, and the thickness of the intermediate layer was adjusted such that the ratio 2r₂/M_{P} with respect the diameter at the interface position between the trench layer and the intermediate layer is 2.92. Although OH groups are present at the interface between the intermediate layer and the trench layer at 0.9 ppm by weight, the effect of transmission loss of the optical fiber can be restricted.

A base material was actually heated to 2100°C, softened, and drawn to form an optical fiber with a core radius of 3.58 µm. The measured value for the mode field diameter of this optical fiber at a wavelength of 1310 nm was 8.43 µm, which is approximately the same as the estimated value. The transmission loss of this fiber showed favorable values of 0.331 dB/km at a wavelength of 1310 nm, 0.296 dB/km at a wavelength of 1383 nm, and 0.184 at a wavelength of 1550 nm. Furthermore, the cutoff wavelength for 22 m of the fiber was 1250 nm, the zero-dispersion wavelength was 1320 nm, and the bending loss for a radius of 5 mm at a wavelength of 1550 nm was 0.040 dB/turn.

### Comparative Example 2-1

When manufacturing the first intermediate base material, the flow rates of the oxygen and hydrogen supplied to the outer burns used for the VAD were increased in order to increase the bulk density of the porous silica glass, dehydration was applied at 1050°C in a chlorine atmosphere, and transparent vitrification was performed by heating to approximately 1500°C in an atmosphere of only helium gas, which does not include fluorine. After this, using the same method as in the embodiment 1-1, the trench layer was formed to create the second intermediate body and then, using the same method as in the embodiment 2-1, the cladding layer was formed to obtain the optical fiber silica glass base material.

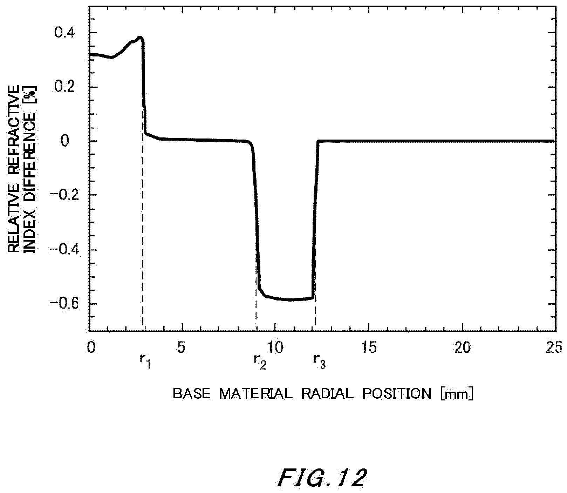

Fig. 12 shows the refractive index profile of the optical fiber silica glass base material according to the comparative example 2-1. Here, the radial position r₁ of the interface between the core and the intermediate layer is 2.9 mm, the radial position r₂ of the interface between the intermediate layer and the trench layer is 9.0 mm, and the interface position r₃ of the interface between the trench layer and the cladding layer is 12.1 mm. The core has a refractive index profile with an approximately stepped shape, and a relative refractive index difference, with the pure silica glass of the cladding as a reference, that is 0.32% in the center portion and has a maximum of 0.39%. The relative refractive index difference of the intermediate layer is approximately flat, and the relative refractive index difference thereof has a maximum value of 0.03% near the core and is approximately 0.0% in all other portions. The trench layer has a refractive index profile with an approximately stepped shape and a minimum value of -0.58%.

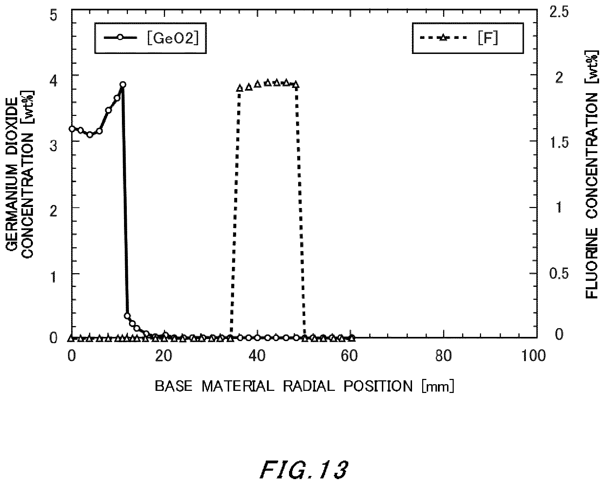

Fig. 13 shows the germanium concentration and fluorine concentration at each radial position of the optical fiber silica glass base material shown in Fig. 12. The germanium concentration and fluorine concentration were measured by cleaving the optical fiber silica glass base material, mirror-polishing the cleaved surface, and using an EPMA to perform the measurement. The germanium concentration and fluorine concentration in Fig. 13 are shown as percentages by weight, and the germanium concentration is a value obtained by converting the percent by weight of germanium dioxide (GeO₂).

The intermediate layer is not actively doped with germanium from a radial position of 2.9 mm to a radial position of 9.0 mm. The only germanium in the intermediate layer is a tiny amount caused by the dispersion of the germanium contained in the core. The germanium concentration of the intermediate layer is at a maximum at the radial position r₁, which is 2.6 mm, decreases suddenly toward the radial outside, and is approximately zero at the radial position of 4.5 mm. Furthermore, the core and the intermediate layer are not actively doped with the negative dopant. The fluorine concentration is zero throughout the core and intermediate layer.

It was assumed that this base material is drawn to manufacture an optical fiber with a core radius of 3.63 µm, and the mode field diameter of this assumed optical fiber at a wavelength of 1310 nm was calculated based on the refractive index profile shown in Fig. 9, and was found to be 8.86 µm. Converting this estimated mode field diameter to a size of the base material before drawing results in a value of M_{P} = 7.05 mm, and the thickness of the intermediate layer was adjusted such that the ratio 2r₂/M_{P} with respect to the diameter at the interface position between the trench layer and the intermediate layer is 2.55.

A base material was actually heated to 2100°C, softened, and drawn to form an optical fiber with a core radius of 3.63 µm. The measured value for the mode field diameter of this optical fiber at a wavelength of 1310 nm was 8.87 µm, which is approximately the same as the estimated value. The transmission loss of this fiber was 0.341 dB/km at a wavelength of 1310 nm, 0.364 dB/km at a wavelength of 1383 nm, and 0.201 at a wavelength of 1550 nm. The large value at 1383 nm is the absorption loss caused by the OH groups. The large value at 1550 nm is surmised to be due to the effect of imperfection loss.

The cutoff wavelength for 22 m of the fiber was 1230 nm, the zero-dispersion wavelength was 1315 nm, and the bending loss for a radius of 5 mm at a wavelength of 1550 nm was 0.179 dB/turn. Furthermore, this optical fiber was subjected to a hydrogen aging test, which includes spending 40 hours in a hydrogen (H₂) atmosphere at 1 atmosphere at room temperature (approximately 25°C). The transmission loss spectrum of the optical fiber was measured before and after the aging, and it was found that the loss increased near 1520 nm. Based on this, it is clear that this optical fiber contains structural defects such as peroxy radicals.

The cause of the structural defects such as peroxy radicals is believed to be that there is almost no germanium doping in the intermediate layer. In the comparative example 2-1, a small amount of the germanium added to the core disperses into the intermediate layer, but the doping amount is still substantially zero. The peroxy radical defects occur because it is difficult for the glass structure relaxation to proceed in the interfaces where the glass composition changes suddenly, such as the interface between the core portion and the intermediate portion, the interface between the intermediate portion and the trench portion, and the interface between the trench portion and the cladding portion, when the base material that has been heated and softened hardens again after being elongated to form the optical fiber. Accordingly, by doping the intermediate layer with germanium and fluorine and easing the change of the glass composition at the interface between the core portion and the intermediate layer and the interface between the intermediate portion and the trench portion, the glass structural relaxation can proceed and the structural defects such as peroxy radicals can be restricted.

In the optical fiber formed from the optical fiber silica glass base material shown in the embodiments described above, the occurrence of structural defects such as peroxy radicals and bubbles in the base material caused by sudden changes in the refractive index are restricted by causing the refractive index of the intermediate layer to decrease gradually between the core and the low refractive index cladding portion. As a result, the bending loss of propagated light is decreased, and the zero-dispersion wavelength can be adjusted to be in a range from 1300 nm to 1324 nm. Furthermore, by providing a portion in which the refractive index protrudes within the intermediate layer, the mode field diameter can be expanded and the connection loss with normal single mode optical fiber can be decreased.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

## Claims

1. A silica glass base material for forming an optical fiber comprising:
a core with a radius to r₁ at a central portion of the silica glass base material;
an intermediate layer with an outermost radius to r₂ that is adjacent to the core at a radial position ri and covers a periphery of the core;
a low refractive index trench layer with an outermost radius to r₃ that is adjacent to the intermediate layer at a radial position r₂ and covers a periphery of the intermediate layer; and
an outer cladding layer that is adjacent to the low refractive index trench layer at a radial position r₃ and covers a periphery of the low refractive index trench, wherein
a refractive index of the intermediate layer decreases smoothly and continuously from an inside to an outside thereof, has a maximum value at the radial position r₁, and has a minimum value at the radial position r₂, wherein
the refractive index profile of the intermediate layer has a protruding portion in which the second derivative of the refractive index changes from positive to negative, and then to positive, from the core side to the low refractive index trench layer side, wherein
the core has a maximum refractive index n₀,
the intermediate layer has a refractive index n₁ at the radial position r₁ and a refractive index n₂ at the radial position r₂,
the low refractive index trench layer has a minimum refractive index n₃,
the outer cladding layer has a minimum refractive index n₄, and
n₀ > n₁ > n₂ > n₃ and n₃ < n₄, and wherein
in a region outside the radial position r₂ at which the intermediate layer contacts the low refractive index trench layer, there is an inflection point in a curve representing a refractive index profile, **characterized in that**
the silica glass base material includes OH groups at an interface between the intermediate layer and the low refractive index trench layer at 0.5 ppm to 5 ppm by weight.

## Patentansprüche

1. Quarzglasbasismaterial zum Herstellen einer optischen Faser, mit:
einem in einem Mittenabschnitt des Quarzglasbasismaterials angeordneten Kern mit einem äußersten Radius r₁;
einer Zwischenschicht mit einem äußersten Radius r₂, die an einer radialen Position r₁ an den Kern angrenzt und einen Umfang des Kerns abdeckt;
einer Grabenschicht mit niedrigem Brechungsindex mit einem äußersten Radius r₃, die an einer radialen Position r₂ an die Zwischenschicht angrenzt und einen Umfang der Zwischenschicht abdeckt; und
einer äußeren Mantelschicht, die an einer radialen Position r₃ an die Grabenschicht mit niedrigem Brechungsindex angrenzt und einen Umfang der Grabenschicht mit niedrigem Brechungsindex abdeckt,
wobei ein Brechungsindex der Zwischenschicht von einer Innenseite zu einer Außenseite davon gleichmäßig und kontinuierlich abnimmt, einen Maximalwert an der radialen Position r₁ und einen Minimalwert an der radialen Position r₂ hat,
wobei das Brechungsindexprofil der Zwischenschicht einen Vorsprungabschnitt aufweist, in dem die zweite Ableitung des Brechungsindex sich von der Kernseite zur Seite der Grabenschicht mit niedrigem Brechungsindex von positiv zu negativ und dann zu positiv wechselt, wobei
der Kern einen maximalen Brechungsindex n₀ hat,
die Zwischenschicht an der radialen Position r₁ einen Brechungsindex n₁ und an der radialen Position r₂ einen Brechungsindex n₂ aufweist,
die Grabenschicht mit niedrigem Brechungsindex einen minimalen Brechungsindex n₃ aufweist,
die äußere Mantelschicht einen minimalen Brechungsindex n₄ aufweist, und
n₀ > n₁ > n₂ > n₃ und n₃ < n₄ ist, und wobei
in einem Bereich außerhalb der radialen Position r₂, an der die Zwischenschicht mit der Grabenschicht mit niedrigem Brechungsindex in Kontakt steht, ein Wendepunkt in einer Kurve vorhanden ist, die ein Brechungsindexprofil darstellt,
**dadurch gekennzeichnet, dass**
das Quarzglasbasismaterial OH-Gruppen an einer Grenzfläche zwischen der Zwischenschicht und der Grabenschicht mit niedrigem Brechungsindex mit 0,5 ppm bis 5 ppm bezogen auf das Gewicht enthält.

## Revendications

1. Matériau de base en verre de silice destiné à la formation d'une fibre optique comprenant :
un coeur avec un rayon égal à r₁ dans une partie centrale du matériau de base en verre de silice ;
une couche intermédiaire avec un rayon le plus à l'extérieur égal à r₂ qui est adjacente au coeur à une position radiale r₁ et recouvre la périphérie du coeur ;
une couche de tranchée de faible indice de réfraction avec un rayon le plus à l'extérieur égal à r₃ qui est adjacente à la couche intermédiaire à une position radiale r₂ et recouvre la périphérie de la couche intermédiaire ; et
une couche de gainage extérieure qui est adjacente à la couche de tranchée de faible indice de réfraction à une position radiale r₃ et recouvre une périphérie de la tranchée de faible indice de réfraction, dans lequel
un indice de réfraction de la couche intermédiaire diminue de manière douce et continue à partir de sa partie intérieure vers sa partie extérieure, a une valeur maximale à la position radiale r1 et a une valeur minimale à la position radiale r₂, dans lequel
le profil de l'indice de réfraction de la couche intermédiaire possède une partie proéminente dans laquelle la deuxième dérivé de l'indice de réfraction passe du positif vers le négatif, et ensuite vers le positif, en partant du côté coeur vers le côté couche de tranchée de faible indice de réfraction, dans lequel
le coeur a un indice de réfraction maximal n₀,
la couche intermédiaire a un indice de réfraction n₁ à la position radiale r₁ et un indice de réfraction n₂ à la position radiale r₂,
la couche de tranchée de faible indice de réfraction a un indice de réfraction minimal n₃, la couche de gainage extérieur a un indice de réfraction minimal n₄, et
n₀ > n₁ > n₂ > n₃ et n₃ < n₄, et dans lequel
dans une région extérieure à la position radiale r₂, à laquelle la couche intermédiaire entre en contact avec la couche de tranchée de faible indice de réfraction, il y a un point d'inflexion dans une courbe représentant un profil de l'indice de réfraction, **caractérisé en ce que**
le matériau de base en verre de silice comporte des groupements OH à une interface entre la couche intermédiaire et la couche de tranchée de faible indice de réfraction à raison de 0,5 ppm à 5 ppm en poids.
